# EUROPÄISCHE PATENTSCHRIFT

(11) **EP 2 582 456 B1**
(45) Veröffentlichungstag und Bekanntmachung des Hinweises auf die Patenterteilung: **24.02.2016**
(21) Anmeldenummer: 11719512.3
(22) Anmeldetag: 06.05.2011
(51) Int. Cl.: B02C 4/30, B22D 25/02, B32B 15/01, B30B 3/00, B30B 11/18, C22C 37/10, C22C 38/02, C22C 38/04, C22C 38/44, C22C 38/56

(54) **PROFILIERTE BANDAGE FÜR EINE ROLLENPRESSE**
PROFILED BANDAGE FOR A ROLLER PRESS
BANDAGE PROFILÉ POUR UNE PRESSE À ROULEAUX

(30) Priorität: 18.06.2010 DE 102010024221
(43) Veröffentlichungstag der Anmeldung: 24.04.2013
(73) Patentinhaber: KHD Humboldt Wedag GmbH, 51067 Köln (DE)
(72) Erfinder: FRANGENBERG, Meinhard, 51515 Kürten (DE)
(86) Internationale Anmeldenummer: PCT/EP2011/057306
(87) Internationale Veröffentlichungsnummer: WO 2011/157484

(56) Entgegenhaltungen:
- DE-A1- 3 643 259
- DE-A1- 19 618 143
- DE-A1-102004 043 562

## Beschreibung

Die Erfindung betrifft eine profilierte Bandage für eine Rollenpresse zur Hochdruckbehandlung körnigen Mahlguts, ein Verfahren zur Herstellung dieser profilierten Bandage und die Verwendung einer definierten, hochchromhaltigen Eisenlegierung zur Herstellung dieser profilierten Bandage Zur Zerkleinerung von körnigem und sprödem Mahlgut ist es bekannt, das Mahlgut statt - wie herkömmlich- durch scherende Beanspruchung durch alleinige Anwendung von hohem Druck in einem Walzenspalt energetisch wirtschaftlich zu zerkleinern. Diese Art der Zerkleinerung weist neben dem energetisch günstigen Einsatz auch noch den Vorteil einer erhöhten Standzeit der zur Erzeugung des Drucks im Walzenspalt eingesetzten Walzen auf.

Bei der Zerkleinerung von Gestein und sehr hartem und abrasivem Klinker ist der Standzeit einer Walze einer Rollenpresse jedoch eine vorbestimmte Grenze gesetzt, die bedingt ist durch den starken Abrieb durch das zu zerkleinernde Material. Bei der Zerkleinerung im Walzenspalt ist es daneben wichtig, dass das Mahlgut gleichmäßig und kontrolliert den Walzenspalt passiert. Für einen geringeren Abrieb und für einen verbesserten und gleichmäßigen Einzug des Mahlguts in den Walzenspalt der Walzenpresse ist man daher dazu übergegangen, die gegenläufigen Walzen der Rollenpresse zu profilieren. Im einfachsten Fall handelt es sich um sich in axialer Richtung erstreckende Längsnuten auf der Oberfläche der Walze, in denen sich verdichtetes Mahlgut zur Ausbildung einer autogenen Verschleißschutzschicht ansammelt und die zu einem vergleichmäßigten Materialeinzug führt, selbst dann, wenn das Mahlgut eine breite oder im zeitlichen Mittel variierende Korngrößenverteilung aufweist.

Der Aufbau einer Walze für eine Rollenpresse besteht typischerweise aus einem Walzengrundkörper mit daran angeordneten Wellen. An den Grundkörper werden keine besonderen Anforderungen in Bezug auf Materialeigenschaften gestellt. Auf diesen Grundkörper wird sodann eine Bandage mit der eingangs erwähnten Beschaffenheit der Oberfläche aufgeschrumpft oder mit sonstigen, dem Fachmann bekannten Mitteln befestigt. Diese Bandage ist ein im Wesentlichen zylindrischer Hohlkörper, der auf seiner Innenseite größenkomaptibel mit dem Walzengrundkörper ist und auf seiner Außenseite trägt die Bandage eine meist nachträglich aufgebrachte Profilierung.

Aus der DE 10 2004 043 562 A1 ist eine Ringbandage für eine Rollenpresse bekannt, die im Wesentlichen aus einem Kugelgraphitguss besteht und die ein bainitisches Gefüge mit Restaustenit aufweist. Dieser Werkstoff ist bekannt für den Einsatz zur Herstellung kleinere Motoreneinzelteile aus Guss und ist gekennzeichnet durch Duktilität auf der einen Seite und durch eine sich im Einsatz ausbildende harte Oberfläche auf der anderen Seite. Der Name für diesen Werkstoff wird in der Regel mit "ADI" für engl. "Austempered Ductile Iron" angegeben. Durch seine Eigenschaften eignet sich dieser Werkstoff in hervorragender Weise für den Einsatz in Rollenpressen, birgt jedoch den Nachteil, dass metallische Gefüge nicht Wesentlich über 400°C hinaus erhitzt werden darf, um keine unerwünschte Phasenumwandlung des metallischen Gefüges zu provozieren. Diese Phasenumwandlung führt zu erheblichen Veränderungen der physikalischen Eigenschaften dieses Materials und damit verschlechtert sich der Werkstoff in Bezug auf die Eignung für den Einsatz in einer Rollenpresse.

Da eine Bandage in der Regel auf einen Walzengrundkörper aufgeschrumpft wird, ist eine Erhitzung der Bandage notwendig. Unter Werkstattbedingungen ist eine langsame und gleichmäßige Erhitzung beherrschbar, ohne dass dabei einzelne Bereiche der Bandage überhitzt und somit in ihren lokalen Materialeigenschaften verändert werden. Anders verhält sich dieses am Ort des Einsatzes der Rollenpressen. Zum Erhitzen der Bandagen am Einsatzort werden in der Regel Flammquellen verwendet, welche die Bandage langsam und gleichmäßig aufheizen. Die Oberfläche der Bandage kann bei diesem Verfahren zum Aufheizen dann deutlich über 400°C erhitzt werden, wenn keine Vorkehrungen zur Verhinderung einer Überhitzung getroffen werden. Die kontrollierte Erhitzung erfordert qualifiziertes und geschultes Personal, das am Ort des Einsatzes der Rollenpressen nicht stets verfügbar ist.

Ein weiteres Problem dieses zunächst sehr gut geeigneten Materials ist, dass zum Auftragsschweißen zur Reparatur oder zur erstmaligen Installation von sich in axialer Richtung erstreckender Längsnuten für die eingangs erwähnten Zwecke ebenfalls kontrollierte Schweißbedingungen eingehalten werden müssen, um qualitativ hochwertige Auftragsschweißnähte zu erhalten.

Dieses Problem wird dann am Einsatzort einer Rollenpresse mit speziell in Bezug auf die Materialeigenschaften ungeschulten Personals wichtig, wenn vorhandene Profilierungen im Rahmen der regelmäßigen Wartung oder der Materialerhaltung durch Auftragsschweißungen aufgebaut werden sollen. Eine herkömmliche aufgeschweißte Auftragsnaht, die ohne Beachtung der Besonderheiten dieses Materials erzeugt wurde, erscheint zunächst fest und qualitativ hochwertig auszufallen. Im Betrieb jedoch bricht das unter Auftragsnaht liegende Grundmaterial und die Auftragsnähte lösen sich von der Walzenbandage. Je nach Behandlung der Bandage ist diese damit nicht mehr reparabel.

In der DE3643259C1 wird eine hochchromhaltige Legierung offenbart, die sich zur Herstellung von solchen Walzen eignet, die zum Walzen in Warmbandstraßen eingesetzt werden. Die darin offenbarte hochchromhaltige Legierung zeichnet sich dadurch aus, dass die Walze im Einsatz keine Eindrücke ausbildet und nicht mit dem Walzgut verklebt. Über weitere besondere Eignungen dieser Legierung ist aus der DE3643259C1 nichts bekannt.

Aufgabe der Erfindung ist es, eine profilierte Bandage für eine Rollenpresse zur Hochdruckbehandlung körnigen Mahlguts zur Verfügung zu stellen, welche die Nachteile aus dem Stand der Technik nicht aufweist.

Die der Erfindung zu Grunde liegende Aufgabe wird gelöst durch eine profilierte Bandage nach den Merkmalen des Anspruchs 1. Weitere vorteilhafte Ausgestaltungen der Erfindung sind in den Unteransprüchen 2 bis 4 angegeben. Die Verfahrensaufgabe wird gelöst durch das Verfahren gemäß Anspruch 5 bis 7.

Erfindungsgemäß wird vorgeschlagen, eine Bandage für eine Rollenpresse zur Verfügung zu stellen, die eine hochchromhaltige Eisenlegierung mit folgenden Legierungsbestandteilen aufweist:

| **Element** | **min. gew.%** | **max Gew.-%** |
|---|---|---|
| C | 2,70% | 2,85% |
| Si | 0,95% | 1,02% |
| Mn | 0,55% | 0,64% |
| P | 0,0012% | 0,0027% |
| S | 0,022% | 0,027% |
| Cr | 16,90% | 17,50% |
| Mo | 0,40% | 1,30% |
| Ni | 4,35% | 4,55% |

Die besonders erwünschten Eigenschaften der Bandage sind aber nicht allein durch den Werkstoff gegeben, aus denen die Bandage hergestellt ist, sondern erst eine nachträgliche oder schon beim Guss eingebrachte Oberflächenprofilierung führt erst zum erfindungsgemäßen Produkt.

Überraschender Weise wurde gefunden, dass der hochchromhaltige Werkstoff gemäß Anspruch 1 mehrere, für eine Bandage für eine Rollenpresse erwünschte Eigenschaften in Verbindung mit der Profilierung aufweist.

Der an sich bekannte, hochchromhaltige Legierungswerkstoff, der geeignet ist für die Herstellung von ganzen Walzen für den Heißeinsatz in Warmbandstraßen, wobei die hochchromhaltige Legierung nicht mit dem Walzgut verklebt, zeigt bei Verwendung für eine Bandage einer Hochdruckrollenpresse im Kaltbetrieb im Innern der Bandage eine gewünschte Duktilität, wodurch die Bandage unempfindlich gegenüber der Passage von nicht zerkleinerbaren Mahlgutbestandteilen wird. Ein im Inneren spröder Werkstoff einer Bandage für eine Rollenpresse kann bei der Passage eines solchen Mahlgutbestandteiles leicht brechen und die Bandage damit unbrauchbar machen. Durch die Duktilität im Inneren des Werkstoffes ist diese Gefahr gegenüber spröden Werkstoffen erheblich reduziert. Dennoch ist das Material an der Oberfläche der Bandage hart genug, um eine zufriedenstellende Standzeit aufzuweisen, wenn dieser Werkstoff verwendet wird zur Herstellung einer Bandage für eine Hochdruckrollenpresse.

Im Besonderen hat die Bandage aus dem gemäß Anspruch 1 definierten Werkstoff die bisher unbekannte und allein durch Versuch ermittelte Eigenschaft, eine durch Auftragsschweißung in einfacher Weise reparable Oberflächenstruktur zu zeigen.

Eine profilierte Bandage gemäß Anspruch 1, die aus einem einzigen Material im Schleudergussverfahren oder im statischen Gussverfahren hergestellt ist und dabei bereits durch den Formkörper eingebrachte Oberflächennuten in axialer Richtung aufweist oder durch zerspanende Bearbeitung oder durch Schleifen eingearbeitete axiale Nuten aufweist, kann am Einsatzort mit vergleichsweise einfachen Mitteln durch Auftragsschweißen aufgearbeitet werden. Die Beständigkeit des Werkstoffes an der Oberfläche bei Hitze in Verbindung mit den duktilen Eigenschaften des Materiales im Inneren des Gusskörpers bei des Weiteren erwünschter Oberflächenhärte macht die erfindungsgemäße Bandage in hervorragender Weise geeignet für den Einsatz in einer Hochdruckrollenpresse.

Im Gegensatz zu einer zunächst nicht profilierten Bandage, weist die profilierte Bandage andere Eigenschaften auf. Eine nicht profilierte Bandage weist erst durch Auftragsschweißung unter Vergrößerung des Durchmessers durch die Auftragsschweißung eine harte Oberflächenprofilierung auf. Diese muss regelmäßig im Rahmen der Wiederaufarbeitung entfernt und wieder aufgebracht werden. Im Gegensatz dazu weist die hier durch nachträgliches Einbringen von Nuten in axialer Richtung oder durch Einformen von axialen Nuten profilierte Bandage die Eigenschaft auf, dass die Profilkämme stets wieder aufgebaut werden können.

Beim Aufarbeiten der erfindungsgemäßen Walze bleibt stets ein Rest der Profilkämme der Bandage stehen, die als Aufnahmefundament für eine Auftragsschweißung dienen. Beim Auftragsschweißen gelingt die qualitative Verbindung der Auftragsschweißnaht mit dem Profilkamm auch mit einfachen Mitteln, die am Einsatzort der Walze kontrollierbar sind.

Die Erfindung wird anhand der folgenden Figuren näher erläutert.

Es zeigt:
- Figur 1: eine profilierte Bandage,
- Figur 2: einen Ausschnitt aus der Oberfläche einer durch Auftragsschweißung aufgebauten Bandage,
- Figur 3: eine profilierte Bandage mit unterschiedlichen Zusammensetzung einzelner Teile der Bandage.

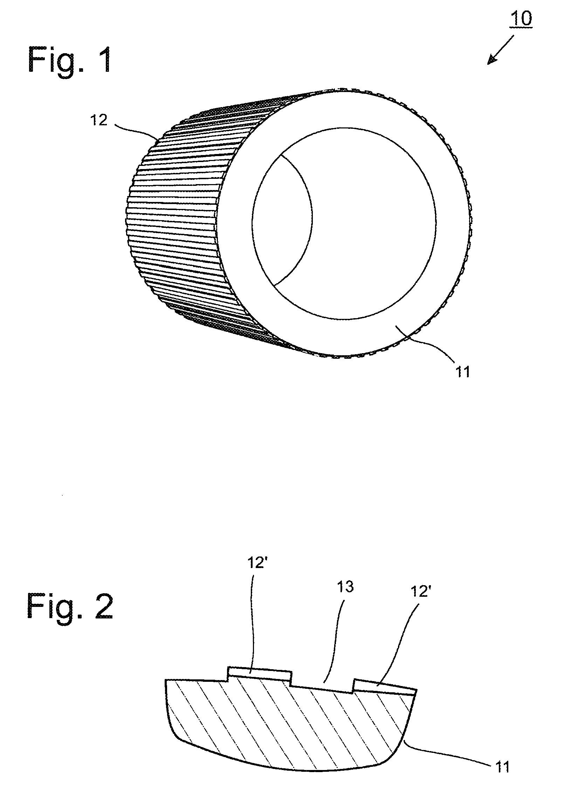

In Figur 1 ist eine erfindungsgemäße Bandage 10 für eine Rollenpresse dargestellt, die einen Bandagengrundkörper 11 und eine äußere Profilierung mit Profilkämmen12 aufweist. Erfindungsgemäß wird vorgeschlagen, das Material der Bandage 10 mit den oben genannten Legierungsbestandteilen zu wählen und die Bandage 10 mit den Profilkämmen 12 auszustatten, wobei die Profilkämme 12 schon während des Gusses in die Bandage 10 eingeformt sind oder nachträglich durch Einbringen von sich in axialer Richtung erstreckender Profilnuten 13 (Figur 2) geformt werden.

Die Duktilität des Bandagengrundkörpers 11 ist so beschaffen, dass die Bandage ein Aufschrumpfen auf einen Walzengrundkörper (hier nicht abgebildet) verträgt und auch mechanische Belastungen verträgt, die beispielsweise durch Passage eines nicht im Walzenspalt zerkleinerbaren Körpers, wie ein größeres Hartmetallstück, entstehen.

Zur Herstellung der Bandage wird ein einfaches Verfahren angewendet, bei welchem zunächst ein zylindrischer Hohlkörper durch statisches Gießen oder Schleudergießen hergestellt wird, und anschließend axiale Längsnuten auf die Oberfläche des zylindrischen Hohlkörpers eingebracht werden. Für die Wahl der Legierung der Oberfläche des zylindrischen Hohlkörpers ist es wichtig, dass diese die nachstehende Zusammensetzung aufweist:

| **Element** | **min. gew.%** | **max Gew.-%** |
|---|---|---|
| C | 2,70% | 2,85% |
| Si | 0,95% | 1,02% |
| Mn | 0,55% | 0,64% |
| P | 0,0012% | 0,0027% |
| S | 0,022% | 0,027% |
| Cr | 16,90% | 17,50% |
| Mo | 0,40% | 1,30% |
| Ni | 4,35% | 4,55% |

In Ausgestaltung der Erfindung weist der zylindrische Hohlkörper einen inneren zylindrischen Bestandteil und einen äußeren zylindrischen Bestandteil auf. Der äußere zylindrische Bestandteil ist wie oben beschrieben dargestellt. Der innere zylindrische Bestandteil hingegen weist eine dem äußeren zylindrischen Bestandteil andere Zusammensetzung ohne Chrom, Molybdän und Nickel auf, die nachstehend dargestellt ist:

| **Element** | **min. gew.%** | **max Gew.-%** |
|---|---|---|
| C | 2,80% | 3,60% |
| Si | 1,60% | 2,60% |
| Mn | 0,15% | 0,45% |
| P | 0,012% | 0,060% |
| S | 0,011% | 0,056% |
| Cr | - | - |
| Mo | - | - |
| Ni | - | - |

Dabei wird der zylindrische Hohlkörper im Verbundguss hergestellt.

Die axialen Längsnuten werden entweder schon beim Gießen durch Einformung eingebracht oder nach Erkalten des zylindrischen Hohlkörpers durch Schleifen oder durch zerspanende Bearbeitung in die Oberfläche des zylindrischen Hohlkörpers eingebracht.

In Figur 2 ist gezeigt, dass Profilkämme 12' auf den abgetragenen Profilkämmen 12 aufsitzen. Diese Profilkämme 12' sind nachträglich durch Auftragsschweißen auf die Profilkämme 12 aufgebrachte Auftragsschweißungen zur Reparatur und zum Wiederaufbau einer verschlissenen Bandage 10. Durch die Wahl des Materials ist es möglich, die viele Tonnen schwere Bandage mit einfachen Mitteln durch Auftragsschweißen zu reparieren.

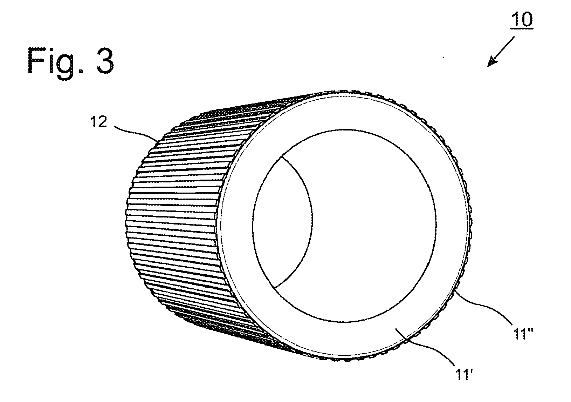

In Figur 3 ist schließlich eine Bandage dargestellt, die unterschiedliche Materialzusammensetzungen für den inneren Bestandteil 11' der Bandage und den äußeren Teil 11" der Bandage aufweist. Der innere Teil 11' der Bandage weist die oben genannte Zusammensetzung ohne Chrom, Nickel und Molybdän auf, hingegen weist der äußere Bestandteil der Bandage die oben genannte Zusammensetzung mit Chrom, Nickel und Molybdän auf.

In Ausgestaltung der Erfindung wird vorgeschlagen, dass der innere Bestandteil der Bandage 50% des Gewichts der Bandage beträgt, bevorzugt, 80%, besonders bevorzugt mehr als 90% des Gewichts der Bandage beträgt. Die Bandagen mit dem geringen Gewichtsanteil der chromhaltigen Legierung zeichnen sich aus durch eine harte Oberfläche, die unempfindlich ist gegenüber Auftragsschweißungen auf den Profilkämmen, wobei die Profilkämme als Fundament für eine Auftragsschweißung dienen und durch die Duktilität des im Wesentlichen chromfreien Materials des inneren Bestandteils der Bandage.

**BEZUGSZEICHENLISTE**

| | | | |
|---|---|---|---|
| 10 | Bandage | 12 | Profilkamm |
| 11 | Bandagengrundkörper | 12' | Auftragsschweißung |
| 11' | innerer Teil | 13 | Profilnut |
| 11" | äußerer Teil | | |

## Patentansprüche

1. Profilierte Bandage für eine Rollenpresse zur Hochdruckbehandlung körnigen Mahlguts,
**dadurch gekennzeichnet, dass**
a) der Werkstoff an der Oberfläche eine Eisenlegierung mit folgenden Legierungsbestandteilen und folgenden Gew.-% ist:
| **Element** | **min. gew.%** | **max Gew.-%** |
|---|---|---|
| C | 2,70% | 2,85% |
| Si | 0,95% | 1,02% |
| Mn | 0,55% | 0,64% |
| P | 0,0012% | 0,0027% |
| S | 0,022% | 0,027% |
| Cr | 16,90% | 17,50% |
| Mo | 0,40% | 1,30% |
| Ni | 4,35% | 4,55% |
b) und dass die auf der Oberfläche der Walzen eingearbeitete Profilierung durch Guss in einer Form, durch nachträgliche Zerspanung der Oberfläche oder durch Schleifen eingearbeitet ist.

2. Profilierte Bandage nach Anspruch 1,
**dadurch gekennzeichnet, dass**
der Werkstoff des inneren Bestandteils der Bandage eine Eisenlegierung mit folgenden Legierungsbestandteilen und folgenden Gew.-% ist:
| **Element** | **min. gew.%** | **max Gew.-%** |
|---|---|---|
| C | 2,80% | 3,60% |
| Si | 1,60% | 2,60% |
| Mn | 0.15% | 0,45% |
| P | 0,012% | 0,060% |
| S | 0,011% | 0,056% |
| Cr | - | - |
| Mo | - | - |
| Ni | - | - |

3. Profilierte Bandage nach Anspruch 2,
**dadurch gekennzeichnet, dass**
der Gewichtsanteil des inneren Bestandteils der Bandage 50%, bevorzugt 80%, besonders bevorzugt mehr als 90% beträgt.

4. Profilierte Bandage nach einem der Ansprüche 1 bis 3,
**dadurch gekennzeichnet, dass**
die Profilierung zusätzlich eine Auftragsschweißung auf den Profilkämmen aufweist.

5. Verfahren zur Herstellung einer profilierte Bandage nach Anspruch 1 oder Anspruch 1 und 4
**gekennzeichnet durch**
- statisches Gießen oder Schleudergießen eines zylindrischen Hohlkörpers,
- Einbringen von axialen Längsnuten auf die Oberfläche des zylindrischen Hohlkörpers,
wobei das Material zum Gießen wie folgt zusammengesetzt ist.
| **Element** | **min. gew.%** | **max Gew.-%** |
|---|---|---|
| C | 2,70% | 2,85% |
| Si | 0,95% | 1,02% |
| Mn | 0,55% | 0,64% |
| P | 0,0012% | 0,0027% |
| S | 0,022% | 0.027% |
| Cr | 16,90% | 17,50% |
| Mo | 0,40% | 1,30% |
| Ni | 4,35% | 4,55% |

6. Verfahren zur Herstellung einer profilierte Bandage nach einem der Ansprüche 2 bis 4,
**dadurch gekennzeichnet, dass**
der zylindrische Hohlkörper im Verbundgussverfahren hergestellt ist, wobei ein innerer Teil des zylindrischen Hohlkörpers eine andere Materialzusammensetzung aufweist als der äußere Teil des zylindrischen Hohlkörpers und wobei die Zusammensetzung des inneren zylindrischen Hohlkörpers wie folgt gewählt ist:
| **Element** | **min. gew.%** | **max Gew.-%** |
|---|---|---|
| C | 2,80% | 3,60% |
| Si | 1,60% | 2,60% |
| Mn | 0,15% | 0,45% |
| P | 0,012% | 0,060% |
| S | 0,011% | 0,056% |
| Cr | - | - |
| Mo | - | - |
| Ni | - | - |
wobei die auf der Oberfläche der Walzen vorhandenen axialen Längsnuten durch Guss in einer Form, durch nachträgliche Zerspanung der Oberfläche oder durch Schleifen eingearbeitet werden.

7. Verfahren nach einem der Ansprüche 5 oder 6,
**gekennzeichnet durch**
Einbringen von axialen Nuten in die Oberfläche des zylindrischen Hohlkörpers durch Schleifen und/oder **durch** zerspanende Bearbeitung und/oder **durch** Einformung während des Gießens in einer Gussform.

## Claims

1. Profiled casing for a roller press for subjecting particulate material to be ground to high-pressure treatment,
**characterized in that**
a) the material at the surface is an iron alloy having the following alloy constituents with the following % by weight:
| **Element** | **Min. % by weight** | **Max. % by weight** |
|---|---|---|
| | | |
| C | 2.70% | 2.85% |
| Si | 0.95% | 1.02% |
| Mn | 0.55% | 0.64% |
| P | 0.0012% | 0.0027% |
| S | 0.022% | 0.027% |
| Cr | 16.90% | 17.50% |
| Mo | 0.40% | 1.30% |
| Ni | 4.35% | 4.55% |
b) and **in that** the profiling worked in on the surface of the rollers is worked in by casting in a mold, by subsequent machining of the surface or by grinding.

2. Profiled casing according to Claim 1,
**characterized in that**
the material of the inner component part of the casing is an iron alloy having the following alloy constituents with the following % by weight:
| **Element** | **Min. % by weight** | **Max. % by weight** |
|---|---|---|
| | | |
| C | 2.80% | 3.60% |
| Si | 1.60% | 2.60% |
| Mn | 0.15% | 0.45% |
| P | 0.012% | 0.060% |
| S | 0.011% | 0.056% |
| Cr | - | - |
| Mo | - | - |
| Ni | - | - |

3. Profiled casing according to Claim 2,
**characterized in that**
the proportion of the inner component part of the casing is 50% by weight, preferably 80% by weight, particularly preferably more than 90% by weight.

4. Profiled casing according to one of Claims 1 to 3,
**characterized in that**
the profiling additionally has a build-up weld on the profile combs.

5. Process for producing a profiled casing according to Claim 1 or Claims 1 and 4,
**characterized by**
- static casting or centrifugal casting of a cylindrical hollow body,
- introducing axial longitudinal grooves onto the surface of the cylindrical hollow body,
wherein the material for casting has the following composition:
| **Element** | **Min. % by weight** | **Max. % by weight** |
|---|---|---|
| | | |
| C | 2.70% | 2.85% |
| Si | 0.95% | 1.02% |
| Mn | 0.55% | 0.64% |
| P | 0.0012% | 0.0027% |
| S | 0.022% | 0.027% |
| Cr | 16.90% | 17.50% |
| Mo | 0.40% | 1.30% |
| Ni | 4.35% | 4.55%. |

6. Process for producing a profiled casing according to one of Claims 2 to 4,
**characterized in that**
the cylindrical hollow body is produced in a composite casting process, wherein an inner part of the cylindrical hollow body has a different material composition to the outer part of the cylindrical hollow body, and wherein the composition of the inner cylindrical hollow body is selected as follows:
| **Element** | **Min. % by weight** | **Max. % by weight** |
|---|---|---|
| C | 2.80% | 3.60% |
| Si | 1.60% | 2.60% |
| Mn | 0.15% | 0.45% |
| P | 0.012% | 0.060% |
| S | 0.011% | 0.056% |
| Cr | - | - |
| Mo | - | - |
| Ni | - | - |
wherein the axial longitudinal grooves present on the surface of the rollers are worked in by casting in a mold, by subsequent machining of the surface or by grinding.

7. Process according to either of Claims 5 and 6,
**characterized by**
introducing axial grooves into the surface of the cylindrical hollow body by grinding and/or by machining and/or by molding in during the casting in a casting mold.

## Revendications

1. Garniture profilée pour une presse à rouleaux pour le traitement sous haute pression d'une matière granulaire à broyer, **caractérisée en ce que**
a) le matériau sur la surface est un alliage de fer contenant les constituants d'alliage suivants, avec les pourcentages en poids suivantes :
| Elément | % en poids minimal | % en poids maximal |
|---|---|---|
| C | 2, 70 % | 2, 85 % |
| Si | 0, 95 % | 1, 02 % |
| Mn | 0, 55 % | 0, 64 % |
| | 0, 0012 % | 0, 0027 % |
| S | 0, 022 % | 0, 027 % |
| Cr | 16, 90 % | 17, 50 % |
| Mo | 0, 40 % | 1, 30 % |
| Ni | 4, 35 % | 4, 55 % |
b) et que le profilage incorporé sur la surface des cylindres est incorporé par coulée dans un moule, par un enlèvement ultérieur de copeaux de la surface, ou par abrasion.

2. Garniture profilée selon la revendication 1, **caractérisée en ce que** le matériau du constituant intérieur de la garniture est un alliage de fer ayant les constituants d'alliage suivants, en les pourcentages en poids suivants :
| Elément | % en poids minimal | % en poids maximal |
|---|---|---|
| C | 2, 80 % | 3, 60 % |
| Si | 1, 60 % | 2, 60 % |
| Mn | 0, 15 % | 0, 45 % |
| P | 0, 012 % | 0, 060 % |
| S | 0, 011 % | 0, 056 % |
| Cr | - | - |
| Mo | - | - |
| Ni | - | - |

3. Garniture profilée selon la revendication 2, **caractérisée en ce que** la proportion en poids du constituant intérieur du ruban est de 50 %, de préférence de 80 %, d'une manière particulièrement préférée supérieure à 90 %.

4. Garniture profilée selon l'une des revendications 1 à 3, **caractérisée en ce que** le profilage comprend en outre un soudage par rechargement sur les peignes du profil.

5. Procédé de fabrication d'une garniture profilée selon la revendication 1 ou les revendications 1 et 4, **caractérisé par**
- une coulée statique ou une coulée centrifuge d'un corps creux cylindrique,
- réalisation de rainures longitudinales axiales sur la surface du corps creux cylindrique,
le matériau destiné à la coulée ayant la composition suivante :
| Elément | % en poids minimal | % en poids maximal |
|---|---|---|
| C | 2,70 % | 2,85 % |
| Si | 0,95 % | 1,02 % |
| Mn | 0,55 % | 0,64 % |
| P | 0,0012 % | 0,0027 % |
| S | 0,022 % | 0,027 % |
| Cr | 16,90 % | 17,50 % |
| Mo | 0,40 % | 1,30 % |
| Ni | 4,35 % | 4,55 % |

6. Procédé de fabrication d'une garniture profilée selon l'une des revendications 2 à 4, **caractérisé en ce que** le corps creux cylindrique est fabriqué par un procédé de coulée composite, une partie intérieure du corps creux cylindrique présentant une composition en matériaux différente de celle de la partie extérieure du corps creux cylindrique, et la composition du corps creux cylindrique intérieur étant choisie comme suit :
| Elément | % en poids minimal | % en poids maximal |
|---|---|---|
| C | 2,80 % | 3,60 % |
| Si | 1,60 % | 2,60 % |
| Mn | 0,15 % | 0,45 % |
| P | 0,012 % | 0,060 % |
| S | 0,011 % | 0,056 % |
| Cr | - | - |
| Mo | - | - |
| Ni | - | - |
les rainures longitudinales axiales présentes sur la surface des cylindres étant incorporées par un enlèvement ultérieur des copeaux de la surface, ou par abrasion.

7. Procédé selon l'une des revendications 5 ou 6, **caractérisé par** la réalisation de rainures axiales dans la surface du corps creux cylindrique par abrasion et/ou par usinage par enlèvement de copeaux et/ou par moulage pendant la coulée dans un moule de coulée.
